Europäisches Patentamt

European Patent Office

Office européen des brevets

(19)

(11) Numéro de publication : **0 466 613 A2**

# (12) DEMANDE DE BREVET EUROPEEN

(21) Numéro de dépôt : **91420202.3**

(51) Int. Cl.⁵ : **F16B 45/02**

(22) Date de dépôt : **19.06.91**

(30) Priorité : **20.06.90 FR 9007898**

(43) Date de publication de la demande :
**15.01.92 Bulletin 92/03**

(84) Etats contractants désignés :
**AT CH DE ES FR GB IT LI**

(71) Demandeur : **Etablissements Ludger SIMOND
Société Anonyme:
Les Bossons
F-74400 Chamonix (FR)**

(72) Inventeur : **Simond, Ludger
Les Bossons
F-74400 Chamonix Mont Blanc (FR)**

(74) Mandataire : **de Beaumont, Michel
Cabinet Poncet 7, chemin de Tillier B.P. 317
F-74008 Annecy Cédex (FR)**

(54) **Mousqueton autoverrouillant.**

(57)    Le mousqueton selon l'invention est conformé de telle sorte que la charge de traction transmise par un premier élément de traction (2) s'applique sur une première extrémité d'application d'effort (17) constituée par le corps (7) de mousqueton, et que la charge de traction transmise par le second élément de traction (3) s'applique sur le doigt de verrouillage (10). Ainsi, l'application de la charge de traction tend à fermer le mousqueton et à produire son autoverrouillage.

EP 0 466 613 A2

Fig_2

La présente invention concerne les dispositifs de liaison à accrochage rapide, plus communément appelés mousquetons.

Les mousquetons, qui sont largement mis en oeuvre dans l'industrie et pour la pratique de l'alpinisme, de la spéléologie et des sports nautiques, comportent généralement un corps à profil en C, définissant un profil général en anneau ouvert plan dont les deux extrémités en regard l'une de l'autre limitent une ouverture obturable par un doigt articulé. Le doigt est articulé selon sa première extrémité sur la première extrémité du corps au moyen d'un axe de rotation transversal. La seconde extrémité du doigt vient porter, en position de fermeture du mousqueton, contre la seconde extrémité du corps, le doigt étant susceptible d'être repoussé par l'utilisateur en pivotant vers l'intérieur de l'anneau en une position d'ouverture.

Les mousquetons connus forment un anneau oblong, dans lequel on peut distinguer deux branches longitudinales disposées selon la longueur de l'anneau et reliées par deux branches transversales formant les extrémités de l'anneau. Le corps de mousqueton forme l'une des deux branches longitudinales et les deux branches transversales. Le doigt de fermeture forme une portion de la seconde branche longitudinale. Cette structure en forme d'anneau allongé, dans laquelle le corps forme les deux extrémités de l'anneau, permet de faire supporter par le corps de mousqueton la majeure partie des efforts de traction supportés par le mousqueton. En effet, en utilisation normale, le mousqueton relie deux éléments de traction, par exemple un premier élément formé d'un piton ancré dans un rocher, et un deuxième élément formé d'une corde coulissant dans le mousqueton. Lors d'une traction, le mousqueton s'oriente de telle manière que le premier élément vient dans l'incurvation formant la première extrémité du mousqueton, et le deuxième élément vient dans l'incurvation formant la seconde extrémité du mousqueton. L'un et l'autre des éléments de traction portent alors sur la face intérieure des extrémités de mousqueton, c'est-à-dire sur le corps lui-même, qui reprend alors la plus grande part des efforts de traction.

Un premier problème vient du fait que, dans les mousquetons ordinaires, le doigt de fermeture est rappelé en position de fermeture par un ressort de rappel. Le ressort de rappel est le seul élément assurant la fermeture du doigt, et maintenant le doigt en position de fermeture. Il en résulte que, dans certaines conditions d'utilisation, certaines sollicitations mécaniques peuvent provoquer l'ouverture du doigt. Lorsque le doigt est ouvert :

– les éléments de traction peuvent s'échapper du mousqueton, qui n'est alors plus capable d'assurer sa fonction de liaison,

– le mousqueton devient moins résistant, puisque le doigt ouvert ne participe plus à la résistance mécanique, et il peut se déformer ou même se briser plus facilement.

On a proposé de résoudre ce premier problème en prévoyant des moyens de verrouillage, interdisant le pivotement du doigt vers sa position d'ouverture. Mais ces moyens de verrouillage nécessitent des manoeuvres supplémentaires lors de l'ouverture et/ou de la fermeture du mousqueton. Il en résulte que de tels mousquetons à verrouillage classiques ne sont pas adaptés par exemple pour des utilisations en conditions extrêmes, par exemple pour l'escalade d'une falaise, puisque leur manoeuvre nécessite l'usage de deux mains.

Ainsi, le problème proposé par la présente invention est de concevoir un mousqueton dans lequel l'application de la charge de traction assure automatiquement et par elle-même le verrouillage du doigt de fermeture et son maintien en position fermée. On réalise ainsi un mousqueton autoverrouillant.

L'avantage ainsi obtenu est qu'un tel mousqueton peut être utilisé sans nécessiter l'usage simultané de deux mains pour l'ouverture et/ou la fermeture du mousqueton, tout en présentant des conditions de fiabilité nécessaires et suffisantes pour interdire l'ouverture du doigt dans toutes les conditions d'utilisation.

En particulier, le verrouillage est assuré, lors de l'escalade d'une voie, par exemple lors d'une chute, malgré les vibrations pouvant apparaître lors d'une telle utilisation.

Selon un autre aspect de l'invention, le mousqueton peut être muni de moyens assurant le maintien du doigt en position d'ouverture, et assurant son rappel automatique en position de fermeture dès qu'une charge de traction est appliquée sur le mousqueton. Cela facilite considérablement l'utilisation du mousqueton, par exemple dans le cas où l'utilisateur doit passer très vite la corde dans le mousqueton ou veut s'accrocher à un élément d'accrochage situé en une position relativement distante, nécessitant de l'atteindre à bout de bras ; il suffit alors de faire passer l'extrémité libre du corps de mousqueton dans une ouverture prévue dans l'élément d'ancrage, et une simple traction sur la corde ou sur le mousqueton provoque sa fermeture et son verrouillage.

Selon une possibilité avantageuse, on cherche également à faciliter l'ouverture du mousqueton en l'absence de charge, pour améliorer les possibilités de décrochage volontaire. On réalise ainsi un mousqueton autoverrouillant à ouverture assistée.

La présente invention, tout en recherchant la facilité de fermeture et/ou d'ouverture comme indiqué ci-dessus, a en outre pour objet de concevoir un tel mousqueton permettant d'allier une grande résistance mécanique à la traction et une grande possibilité d'ouverture.

Pour atteindre ces objets ainsi que d'autres, le mousqueton selon l'invention comprend :

– un corps en forme de tige recourbée entre une première extrémité d'articulation et une seconde extrémité libre d'accrochage ;

– un doigt de fermeture, dont la première extrémité est articulée sur la première extrémité d'articulation du corps selon un axe transversal, et dont la seconde extrémité vient en regard de la seconde extrémité libre d'accrochage du corps ;

– le doigt peut être pivoté autour de son axe d'articulation entre une position d'ouverture, dans laquelle sa seconde extrémité est écartée de la seconde extrémité libre d'accrochage du corps vers l'intérieur de l'anneau, et une position de fermeture dans laquelle sa seconde extrémité est en contact de la seconde extrémité libre d'accrochage du corps pour former un anneau fermé ;

– la seconde extrémité du doigt et la seconde extrémité libre d'accrochage du corps comprennent des formes emboîtantes s'imbriquant l'une dans l'autre telles que, en position de fermeture, les formes emboîtantes interdisent le pivotement du doigt vers l'extérieur de l'anneau et interdisent l'écartement axial relatif des secondes extrémités respectives de doigt et de corps ;

– le mousqueton comprend des moyens de guidage de charge pour que la charge de traction transmise par le premier élément s'applique sur une zone intermédiaire du corps tandis que la charge de traction transmise par le second élément s'applique sur une zone intermédiaire du doigt, l'effort de traction entre le premier élément et le second élément s'effectuant ainsi selon une direction privilégiée de traction passant dans le plan de l'anneau entre la zone d'articulation et la zone d'accrochage du doigt et du corps.

Avec une telle structure, l'application de la charge de traction tend à ramener le corps et le doigt dans leurs positions respectives de fermeture.

Selon un mode de réalisation, les aryens de guidage de charge comprennent :

– le fait que le mousqueton présente une forme générale en anneau allongé selon une direction privilégiée de traction passant par deux extrémités opposées, lesdites extrémités opposées constituant des extrémités d'application d'effort de traction,

– le fait que le corps de mousqueton comprend ladite première extrémité d'application d'effort de traction,

– le fait que le doigt de mousqueton comprend ladite seconde extrémité d'application d'effort de traction,

de sorte que, lors de l'application d'un effort de traction entre un premier élément de traction et un second élément de traction, le mousqueton tend naturellement à s'orienter de façon que sa plus grande dimension soit sensiblement parallèle à la direction de l'effort de traction, le premier élément de traction s'accrochant au corps, le second élément de traction s'accrochant au doigt.

De préférence, les moyens de guidage de charge comprennent une lumière ou une encoche ménagée dans le doigt selon une position intermédiaire et conformée pour être traversée par le second élément' de traction, fixant ainsi le point d'application de l'effort de traction du second élément sur le mousqueton.

Selon un mode de réalisation avantageux, le mousqueton comprend en outre des moyens de verrouillage, par exemple des leviers de verrouillage ou une bague montée à coulissement ou à pivotement sur une portion rectiligne du mousqueton, et rappelés par un ressort vers une position de verrouillage dans laquelle ils immobilisent l'une par rapport à l'autre, en position fermée, deux extrémités respectives de corps et de doigt pour interdire le pivotement du doigt vers sa position d'ouverture.

Selon l'invention, le mousqueton peut en outre comprendre un ressort de rappel sollicitant le doigt en rotation sur le corps vers sa position d'ouverture, contrairement à l'action du ressort habituellement prévu sur les mousquetons connus, dont la présence tend à fermer le doigt.

D'autres objets, caractéristiques et avantages de la présente invention ressortiront de la description suivante de modes de réalisations particuliers, faite en relation avec les figures jointes, parmi lesquelles :

– la figure 1 est une vue de côté d'un mousqueton selon la présente invention en position d'ouverture ;

– la figure 2 est une vue de côté d'un mousqueton selon la présente invention en position de fermeture ;

– les figures 3 à 5 illustrent trois modes d'utilisation d'un mousqueton selon la présente invention ;

– la figure 6 est une vue de côté d'un mousqueton selon un second mode de réalisation de la présente invention, en position de fermeture ;

– la figure 7 est une vue en coupe partielle du corps de mousqueton du mode de réalisation de la figure 6 ;

– la figure 8 représente le doigt du mousqueton de la figure 6 ;

– la figure 9 est une vue en bout d'une bague de verrouillage du mousqueton de la figure 6 ;

– la figure 10 est une vue de côté de la bague de verrouillage du mousqueton de la figure 6 ;

– la figure 11 est une vue de côté d'un mousqueton selon un troisième mode de réalisation de la présente invention, en position d'ouverture ;

– la figure 12 est une vue de profil du mousqueton de la figure 11, en position verrouillée ;

– la figure 13 est une vue de profil du mousqueton de la figure 11, en position déverrouillée ;

– la figure 14 est une vue de côté du mousqueton de la figure 11, en position fermée et verrouillée ;

– la figure 15 est une vue de côté d'un mousqueton selon un quatrième mode de réalisation de l'invention ;

– la figure 16 est une vue de détail en coupe partielle de la zone d'articulation d'un mousqueton selon l'invention, en position ouverte ;

– la figure 17 est une vue similaire en position fermée ; et

– la figure 18 illustre le ressort de rappel associé à une languette.

Comme le représentent les figures, le mousqueton 1 selon la présente invention présente une forme générale en anneau fermé, et est destiné à transmettre une charge de traction entre un premier élément de traction 2 et un second élément de traction 3.

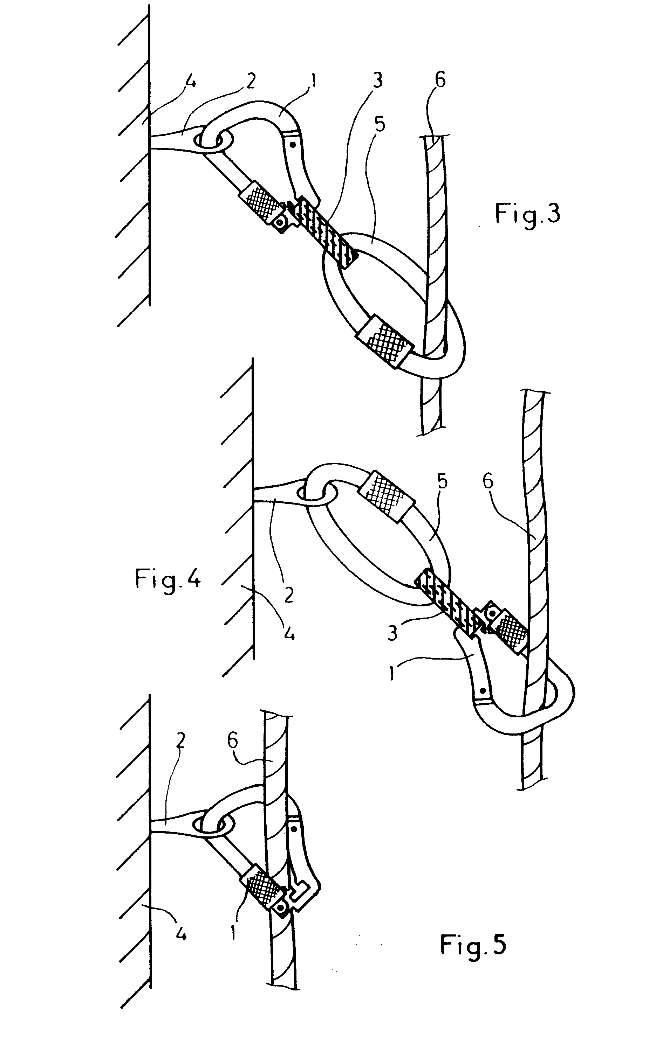

Un premier exemple d'utilisation est représenté sur la figure 3. Le mousqueton 1 assure la liaison entre un piton 2 solidaire d'un rocher 4 et un élément de traction 3 formé d'une sangle reliant le mousqueton 1 et un mousqueton auxiliaire 5 dans lequel coulisse une corde 6. L'ensemble formé par le mousqueton 1, l'élément de traction 3 et le mousqueton auxiliaire 5 est normalement actionné de la façon suivante : on passe tout d'abord la corde 6 dans le mousqueton auxiliaire 5, qui peut être un mousqueton à verrouillage classique. L'utilisateur peut alors accrocher l'ensemble à l'élément de traction 2 en ouvrant le mousqueton 1 et en introduisant une portion du mousqueton 1 dans une lumière appropriée prévue dans l'élément de traction 2. Pour enlever l'ensemble, il suffit d'ouvrir le mousqueton 1 et de le retirer de la lumière de l'élément de traction 2.

La figure 4 représente une seconde disposition d'utilisation : le mousqueton auxiliaire 5 est alors accroché au piton 2, et est relié par le second élément de traction 3 au mousqueton 1 selon l'invention ; la corde 6 traverse le mousqueton 1.

La figure 5 représente une troisième disposition d'utilisation: le mousqueton 1 selon l'invention assure la liaison directe entre le piton 2 et la corde 6.

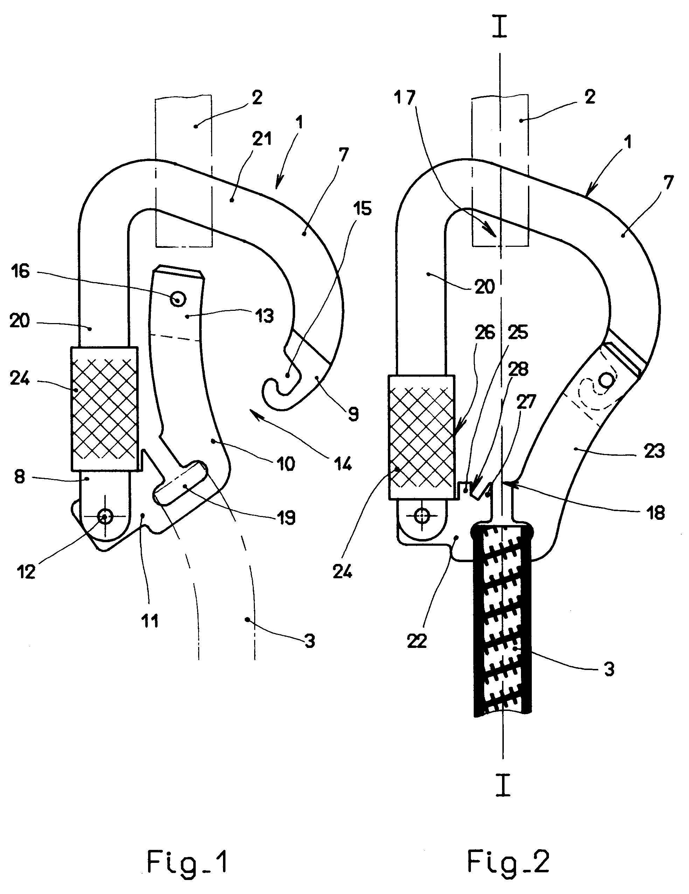

Dans le mode de réalisation représenté sur les figures 1 et 2, le mousqueton 1 selon l'invention comprend un corps 7 en forme de tige recourbée entre une première extrémité d'articulation 8 et une seconde extrémité libre d'accrochage 9. Un doigt de fermeture 10 est articulé par sa première extrémité 11 à la première extrémité d'articulation 8 du corps, selon un axe transversal 12 sensiblement perpendiculaire au plan de l'anneau, et sa seconde extrémité 13 est destinée à venir en regard de la seconde extrémité libre d'accrochage 9 du corps. Le doigt 10 peut être pivoté autour de son axe d'articulation 12 entre une position d'ouverture, représentée sur la figure 1, dans laquelle sa seconde extrémité 13 est écartée de la seconde extrémité libre d'accrochage 9 du corps vers l'intérieur de l'anneau, laissant un passage libre 14 pour l'introduction de l'élément de traction 2, et une position de fermeture, représentée sur la figure 2, dans laquelle sa seconde extrémité 13 vient en contact de la seconde extrémité libre d'accrochage 9 du corps pour former un anneau fermé. Le doigt est rappelé vers sa position de fermeture par des moyens de rappel élastiques, par exemple des moyens classiques habituellement utilisés dans les mousquetons connus.

La seconde extrémité 13 du doigt et la seconde extrémité libre d'accrochage 9 du corps comprennent des formes emboîtantes s'imbriquant l'une dans l'autre telles que, en position de fermeture, les formes emboîtantes interdisent le pivotement du doigt 10 vers l'extérieur de l'anneau et interdisent l'écartement axial relatif des secondes extrémités respectives 9 et 13 de corps et de doigt. Par exemple, dans le mode de réalisation représenté sur les figures, la seconde extrémité libre d'accrochage 9 comprend une encoche intérieure 15 dans laquelle vient s'insérer un axe transversal 16 de doigt reliant deux flasques latéraux entre lesquels s'insère la seconde extrémité libre d'accrochage 9 en position de fermeture. En alternative, l'encoche 15 peut être prévue sur le doigt tandis que l'axe 16 est prévu sur le corps. Ou encore, on peut prévoir des formes monobloc emboîtantes.

Contrairement aux mousquetons traditionnels, dans lesquels les éléments de traction 2 et 3 s'appliquent normalement sur le corps de mousqueton, le doigt n'ayant sensiblement qu'une fonction d'ouverture et de fermeture, le mousqueton selon l'invention est conformé de telle manière que la charge de traction transmise par le premier élément de traction 2 s'applique sur le corps 7 de mousqueton tandis que la charge de traction transmise par le second élément de traction 3 s'applique sur le doigt 10. L'effort de traction entre le premier élément 2 et le second élément 3 s'effectue ainsi selon une direction générale I-I passant dans le plan de l'anneau entre la zone d'articulation et la zone d'accrochage du doigt et du corps. La zone d'articulation est formée par l'axe 12 et les extrémités d'articulation 8 et 11, tandis que la zone d'accrochage est formée par les deux extrémités 9 et 13 de corps et de doigt.

Il en résulte que l'application d'une charge de traction tend systématiquement à ramener le corps et le doigt dans leurs positions respectives de fermeture représentées sur la figure 2.

Le mousqueton selon l'invention comprend, pour cela, des moyens de guidage de charge pour que la charge de traction s'applique systématiquement en des positions bien définies du mousqueton.

Dans les modes de réalisation représentés, le guidage de charge est assuré par le fait que le mousqueton présente une forme générale en anneau allongé selon la direction privilégiée de traction I-I passant par deux extrémités opposées d'application d'effort de traction 17 et 18. Le corps de mousqueton 7 comprend la première extrémité d'application d'effort de traction 17. Le doigt de mousqueton 10

comprend la seconde extrémité d'application d'effort de traction 18. Ainsi, lors de l'application d'un effort de traction entre le premier élément de traction 2 et le second élément de traction 3, le mousqueton tend naturellement à s'orienter de façon que sa plus grande dimension soit sensiblement parallèle à la direction de l'effort de traction I-I, le premier élément de traction 2 s'accrochant au corps de mousqueton 7 à la première extrémité d'application d'effort de traction 17, le second élément de traction 3 s'accrochant au doigt de mousqueton 10 à la seconde extrémité d'application d'effort de traction 18.

Une lumière ou une encoche 19 est avantageusement ménagée dans le doigt 10 selon une position intermédiaire sur le doigt, et est conformée pour être traversée par le deuxième élément de traction 3, par exemple un second élément de traction 3 en forme de sangle, de corde, de câble ou même de mousqueton. La lumière ou encoche 19 favorise ainsi le positionnement approprié du point d'application de l'effort de traction du second élément de traction 3 sur le mousqueton 1. Il faut toutefois observer que le positionnement du point d'application de cet effort de traction peut être assuré par la forme géométrique globale du mousqueton. En fixant ainsi le point d'application de l'effort de traction du second élément de traction 3, le point d'application de l'effort de traction du premier élément de traction 2 se trouve automatiquement situé en une position opposée sur le corps 7 de mousqueton.

Pour faciliter l'utilisation, et notamment l'insertion du deuxième élément de traction 3 dans la lumière 19, ladite lumière peut avantageusement être une encoche en T, telle que représentée, dont la branche centrale s'ouvre vers l'intérieur,du mousqueton et dont la branche transversale est sensiblement perpendiculaire à la direction I-I de l'effort.

Le corps 7 de mousqueton comprend, à partir de sa première extrémité d'articulation 8, une portion longitudinale 20 généralement rectiligne, une extrémité d'application d'effort de traction 17 fortement incurvée selon un angle supérieur à 90 degrés, une portion transversale 21 généralement oblique elle-même incurvée jusqu'à la seconde extrémité d'accrochage 9. Le doigt 10 comprend lui-même, à partir de sa première extrémité d'articulation 11, une première portion transversale 22 suivie d'une portion oblique 23 et terminée par la seconde extrémité 13. De préférence, la partie oblique 23 de doigt est incurvée selon une concavité tournée vers l'extérieur, comme le représentent les figures.

De préférence, la lumière ou encoche 19 est plus proche de l'extrémité d'articulation 11 de doigt que de son extrémité libre d'accrochage 13.

Avec une telle structure, les efforts de traction sont principalement supportés par la portion longitudinale 20 de corps 7, par l'axe de rotation 12 et la portion transversale 22 de doigt. On allège ainsi les efforts supportés par la zone d'accrochage du mousqueton, formée par les extrémités 9 et 13 de corps et de doigt.

Selon un mode de réalisation avantageux, représenté sur les figures 1 et 2, le mousqueton comprend en outre une bague de verrouillage 24, montée à coulissement sur une portion rectiligne du mousqueton 1, et rappelée par un ressort vers une position de verrouillage dans laquelle elle immmobilise l'une par rapport à l'autre en position fermée deux extrémités respectives de corps et de doigt, pour interdire le pivotement du doigt 10 vers sa position d'ouverture. En alternative, on peut également utiliser une bague à vis ou une bague quart de tour.

Dans la variante représentée, la bague 24 est montée à coulissement sur la portion de corps 7 adjacente à son extrémité d'articulation 8. Le doigt 10 comprend, au voisinage de son extrémité d'articulation 11, un premier ergot 25 venant en appui sur la surface latérale extérieure 26 de la bague 24 lorsque celle-ci est en position de verrouillage, doigt fermé, comme le représente la figure 2. L'ergot 25 et la bague 24 interdisent alors l'ouverture du doigt 10. En déplaçant la bague 24 à l'écart de la zone d'articulation, l'ergot 25 peut alors se déplacer en direction de la partie longitudinale 20 de corps 7 et autoriser le pivotement du doigt 10.

Dans le mode de réalisation représenté, le premier ergot 25 assure en outre un verrouillage ouvert : l'ergot 25 vient en appui sur la surface latérale intérieure de la bague 24 lorsque celle-ci est en position de verrouillage doigt 10 ouvert. Le premier ergot 25 s'oppose alors à la fermeture du doigt 10. De préférence, le premier ergot 25 comporte une face d'appui 28 qui se trouve en position oblique lorsque le doigt est ouvert, de sorte que, sous l'application d'un effort de traction entre le premier élément de traction 2 et le second élément de traction 3, l'effort de traction tend à faire pivoter le doigt 10 vers sa position de fermeture, ce qui provoque le déplacement axial de la bague en appui contre la face d'appui oblique 28 de l'ergot, à l'encontre du ressort de rappel de bague et à l'écart de la zone d'articulation. La bague libère alors le doigt qui pivote jusqu'à sa position de fermeture, la bague 24 étant alors rappelée en position de verrouillage pour interdire l'ouverture du doigt 10.

De préférence, en position de fermeture, la portion transversale 22 de doigt, adjacente à son extrémité articulée, est sensiblement perpendiculaire à la portion longitudinale 20 rectiligne de corps. On améliore ainsi l'efficacité du verrouillage du doigt 10 par la bague 24 en position de fermeture.

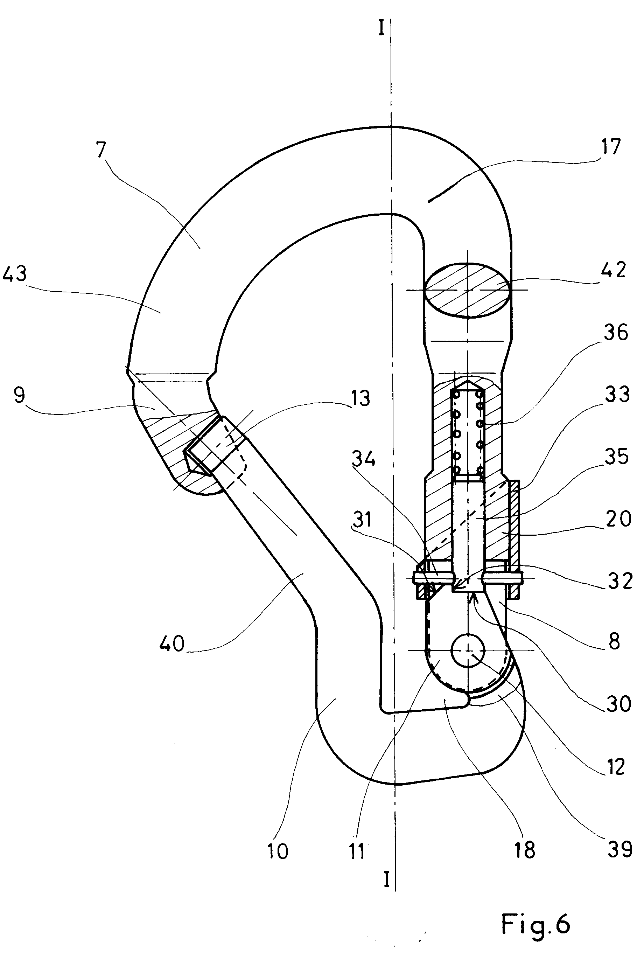

Dans le mode de réalisation représenté sur la figure 6, le mousqueton comprend un corps 7 dont la forme est similaire à celui du mode de réalisation des figures 1 et 2, avec une première extrémité d'articulation 8 et une seconde extrémité libre d'accrochage 9. Le doigt de fermeture 10 est articulé par sa première extrémité 11 à la première extrémité d'articulation 8 du corps, selon l'axe 12.

Dans ce mode de réalisation, l'extrémité articulée 11 du doigt 10 comprend une facette 30 de maintien en position fermée, une facette 31 de maintien en position ouverte, et une facette de verrouillage 32. La facette 30 de maintien en position fermée est bordée par la facette de verrouillage 32 la reliant à la facette 31 de maintien en position ouverte, comme le représente la figure.

Une bague de verrouillage 33 est solidaire en translation axiale, par une goupille 34, d'un axe de verrouillage 35. L'extrémité de l'axe de verrouillage 35 vient porter contre l'extrémité articulée 8 du corps de mousqueton, de sorte que, en position fermée représentée sur la figure, l'axe de verrouillage 35 porte axialement contre la facette 30 de maintien en position fermée et porte latéralement contre la facette de verrouillage 32. L'ensemble formé par la bague de verrouillage 33 et l'axe de verrouillage 35 est repoussé par un ressort 36 en direction de l'extrémité articulée 11 du doigt 10, de sorte que l'axe de verrouillage 35 est maintenu en appui contre la facette 30, et ne peut pas échapper de la facette de verrouillage 32. Ainsi, en position fermée, l'axe de verrouillage interdit le pivotement du doigt 10 vers sa position ouverte. En position ouverte, l'axe de verrouillage 35 porte axialement contre la facette 31 de maintien en position ouverte, et n'oppose pas une résistance importante au retour du doigt 10 en position fermée.

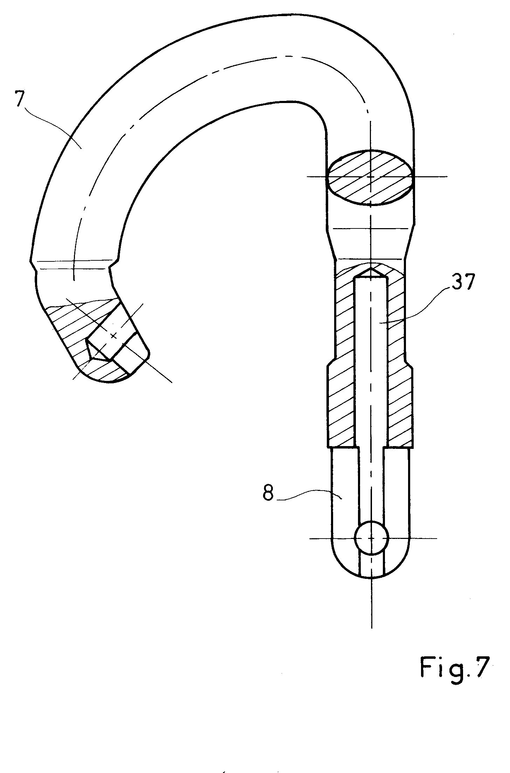

La figure 7 représente le détail de réalisation du corps 7 de mousqueton selon ce mode de réalisation. On retrouve un logement axial 37 destiné à contenir le ressort 36 et l'axe de verrouillage 35. L'extrémité articulée 8 du corps 7 comprend deux ailes latérales formant une chappe dans laquelle vient s'engager l'extrémité articulée 11 du doigt.

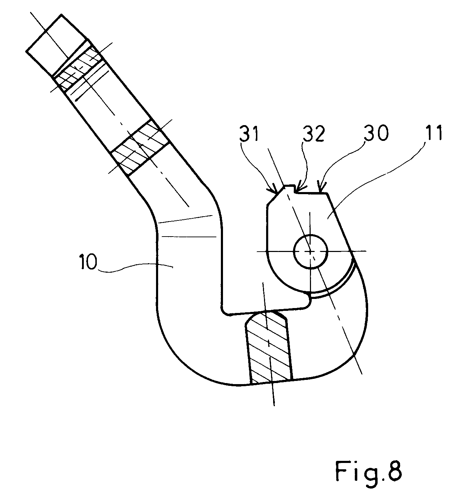

Sur la figure 8, on a représenté le doigt 10, avec sa portion d'extrémité articulée 11, comportant un trou de passage pour l'axe 12, et comportant la facette 30 de maintien en position fermée, la facette 31 de maintien en position ouverte, et la facette 32 de verrouillage en position fermée.

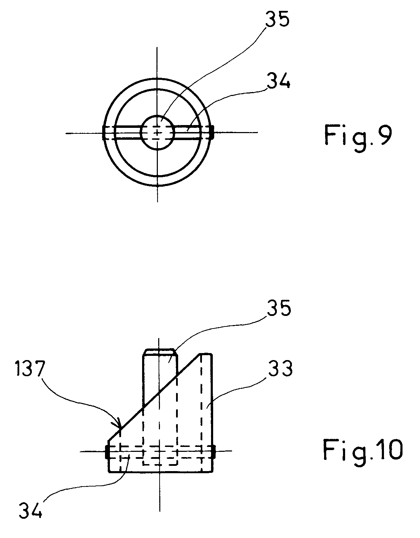

Les figures 9 et 10 représentent la bague de verrouillage 33, solidarisée à l'axe de verrouillage 35 par la goupille transversale 34. La bague de verrouillage 33 comporte avantageusement un biais 137, orienté vers l'intérieur du mousqueton comme le représente la figure 6, et facilitant l'ouverture du doigt.

Dans ce mode de réalisation, le doigt 10 présente une forme recourbée, avec une partie intermédiaire 18 en arc de faible diamètre, à fond plat pour le passage d'une sangle, formant l'encoche ou lumière de passage du second élément de traction 3. Le doigt présente une première branche latérale 39 de plus faible longueur, comprenant la première extrémité 11 articulée, et comprend une seconde branche latérale 40 de plus grande longueur comprenant la seconde extrémité 13 d'accrochage. Le corps 7 présente également une formé recourbée, avec une partie intermédiaire 17 en arc de faible diamètre formant extrémité d'application de l'effort de traction, avec une première branche latérale longitudinale 42 de plus grande longueur comprenant la première extrémité d'articulation 8, et avec une seconde branche latérale 43 de plus faible longueur comprenant la seconde extrémité libre d'accrochage 9. La direction privilégiée de traction I-I passant par la partie courbe 17 de corps 7 et la partie courbe 18 de doigt 10, se trouve à proximité de la grande branche 42 du corps 7, favorisant la reprise des efforts de traction.

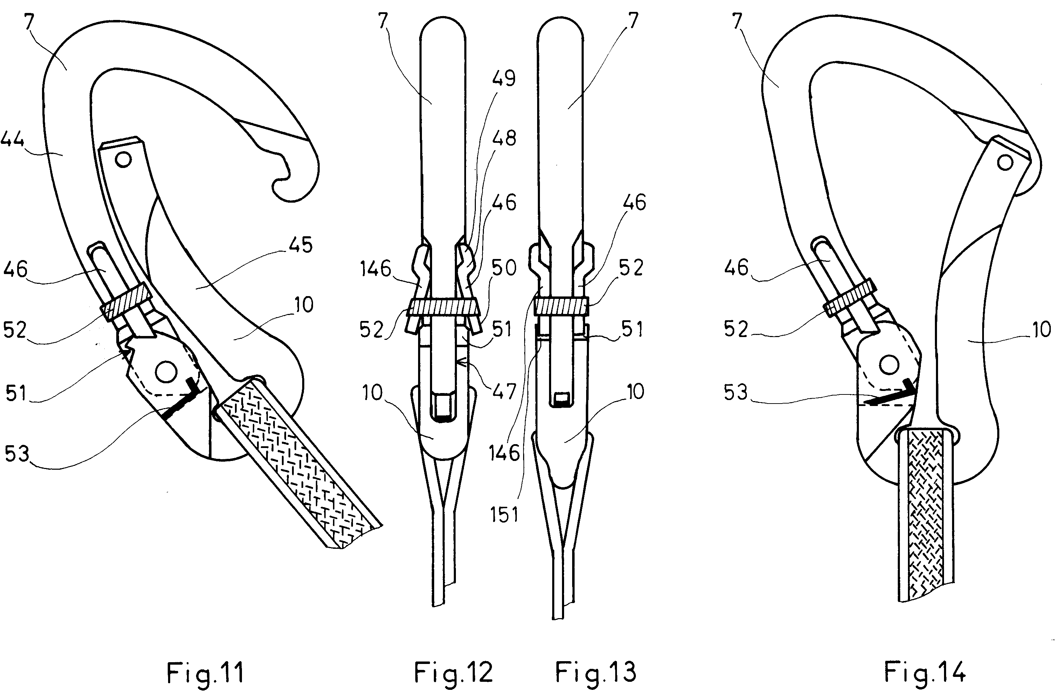

Dans le mode de réalisation des figures 11 à 14, les formes de corps et de doigt sont légèrement différentes. Le corps 7 présente une première branche latérale longitudinale 44 légèrement incurvée, à concavité tournée vers l'intérieur, comme le représente la figure 11. La seconde branche latérale 45 du doigt est légèrement incurvée vers l'extérieur, de façon à suivre sensiblement l'incurvation de la première branche latérale 44 de corps lorsque le mousqueton est en position ouverte.

Dans ce mode de réalisation, le mousqueton comprend des moyens de verrouillage différents de ceux des modes de réalisation précédents. Dans ce mode de réalisation, les moyens de verrouillage comprennent au moins un levier de verrouillage monté pivotant sur le corps de mousqueton selon un axe transversal intermédiaire sensiblement parallèle au plan de mousqueton, ce levier de verrouillage comportant une branche d'actionnement accessible par l'utilisateur par pression radiale sur le corps de mousqueton, et une branche de verrouillage destinée à s'engager sur des parties correspondantes du doigt.

Par exemple, on considère sur les figures 11 à 14 le levier de verrouillage 46, à profil légèrement en S, maintenu en appui contre une face latérale plane 47 du corps 7 de mousqueton. La partie centrale coudée 48 du levier 46 de verrouillage forme axe transversal intermédiaire pour le pivotement du levier de verrouillage 46, parallèlement au plan du mousqueton. La partie centrale coudée 48 relie d'une part une branche d'actionnement 49, accessible par l'utilisateur par pression radiale sur le corps du mousqueton, et une branche de verrouillage 50 destinée à s'engager sur des parties correspondantes du doigt 10.

Le doigt 10 comprend au moins une encoche latérale 51, mieux visible sur la figure 11, dans laquelle peut s'engager la branche de verrouillage 50 du levier de verrouillage lorsque le doigt est fermé, comme le représentent les figures 13 et 14. Le levier de verrouillage 46 peut pivoter entre une position verrouillée, représentée sur la figure 13, dans laquelle l'extrémité de branche de verrouillage 50 porte contre l'extrémité articulée du doigt 10 et peut s'engager dans son encoche latérale 51 pour interdire son pivotement, et une position déverrouillée représentée sur les figures 12 et 11, dans laquelle la branche de verrouillage 50 est à l'écart du doigt 10 pour autoriser son pivotement.

Des moyens élastiques rappellent le levier de verrouillage 46 vers sa position verrouillée.

Dans le mode de réalisation représenté, le mousqueton comprend deux leviers de verrouillage identiques 46 et 146, diamétralement opposés, et coopérant avec deux encoches opposées 51 et 151 de l'extrémité articulée du doigt 10. Un anneau élastique 52 entoure le corps de mousqueton et les branches de verrouillage des leviers de verrouillage 46 et 146 pour rappeler lesdits leviers de verrouillage en leur position verrouillée représentée sur la figure 13.

Dans ce mode de réalisation des figures 11 à 14, on a également représenté un ressort de rappel 53, sollicitant le doigt 10 en rotation sur le corps 7 vers sa position ouverte. Ainsi, en l'absence de charge, le déverrouillage des moyens de verrouillage tels que les leviers 46 et 146 produit l'ouverture automatique du mousqueton. L'application d'une charge produit la fermeture automatique du mousqueton et l'engagement des moyens de verrouillage 46 et 146 interdisant ensuite l'ouverture du mousqueton même en l'absence de charge, jusqu'à manoeuvre ultérieure volontaire des leviers 46 et 146.

Un ressort tel que le ressort 53 peut également être adapté dans les autres modes de réalisation décrits précédemment.

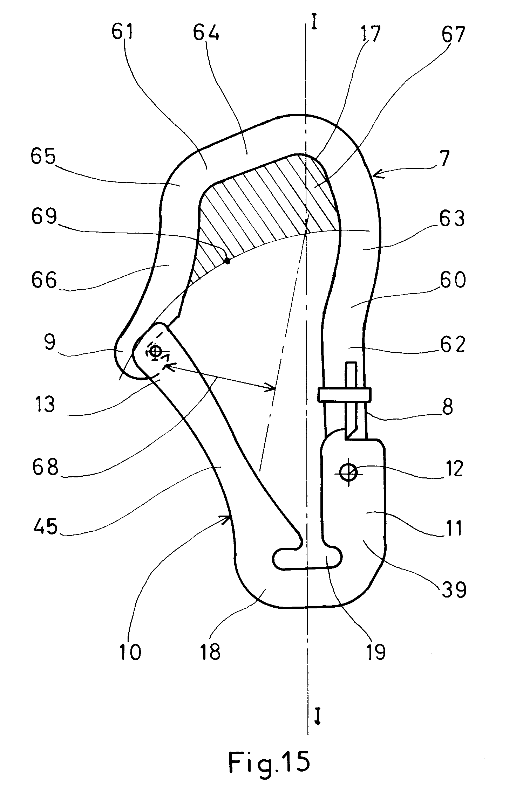

La figure 15 représente, en vue de côté, un mode de réalisation de mousqueton selon la présente invention qui est particulièrement avantageux pour obtenir à la fois une grande résistance mécanique, une grande ouverture et une grande facilité d'utilisation.

La facilité d'utilisation est obtenue, comme dans les modes de réalisation précédents, par les mêmes moyens favorisant la fermeture et/ou l'ouverture du mousqueton.

Les grandes possibilités d'ouverture et la grande résistance mécanique à la traction sont obtenues en choisissant des formes particulières pour le doigt 10 et le corps 7.

Ainsi, dans ce mode de réalisation, le corps 7 comprend, à partir de sa première extrémité d'articulation 8, une première branche latérale longitudinale 60 comportant une partie longitudinale rectiligne 62 sensiblement parallèle à la direction privilégiée de traction I-I. Cette partie longitudinale 62 est suivie d'une partie arrondie 63 légèrement déportée vers l'extérieur comme le représente la figure, qui se raccorde elle-même à l'extrémité d'application d'effort de traction 17 fortement incurvée selon un angle supérieur à 90 degrés. On trouve ensuite une portion oblique 64, sensiblement rectiligne et généralement parallèle au lieu géométrique 69 des positions prises par l'extrémité libre d'accrochage 13 du doigt 10 lors du pivotement du doigt. Cette portion oblique 64 se raccorde, par un coude 65, à un serpent d'extrémité 66 légèrement incurvé à concavité tournée vers l'extérieur.

Le doigt 10 comprend, à partir de sa première extrémité d'articulation 11, une première branche latérale 39 de plus faible longueur et sensiblement parallèle à la direction privilégiée de traction I-I lorsque le doigt est en position fermée. On trouve ensuite la partie intermédiaire 18 en arc de faible diamètre, puis une seconde branche latérale 45 de plus grande longueur, à concavité légèrement tournée vers l'extérieur, et comportant la seconde extrémité 13 d'accrochage du doigt.

Grâce à ces formes telles que représentées sur la figure 15, le pivotement du doigt 10 laisse un espace intérieur 67 disponible particulièrement grand, pour l'introduction d'au moins quatre brins de cordage. En outre, lorsque le doigt est en position ouverte, son extrémité d'accrochage 13 venant en appui contre la partie arrondie déportée 63 du corps, il reste une ouverture 68 particulièrement large permettant l'introduction de brins de cordage ou autres objets auxquels le mousqueton doit être accroché. On facilite ainsi considérablement le mousquetonnage dynamique.

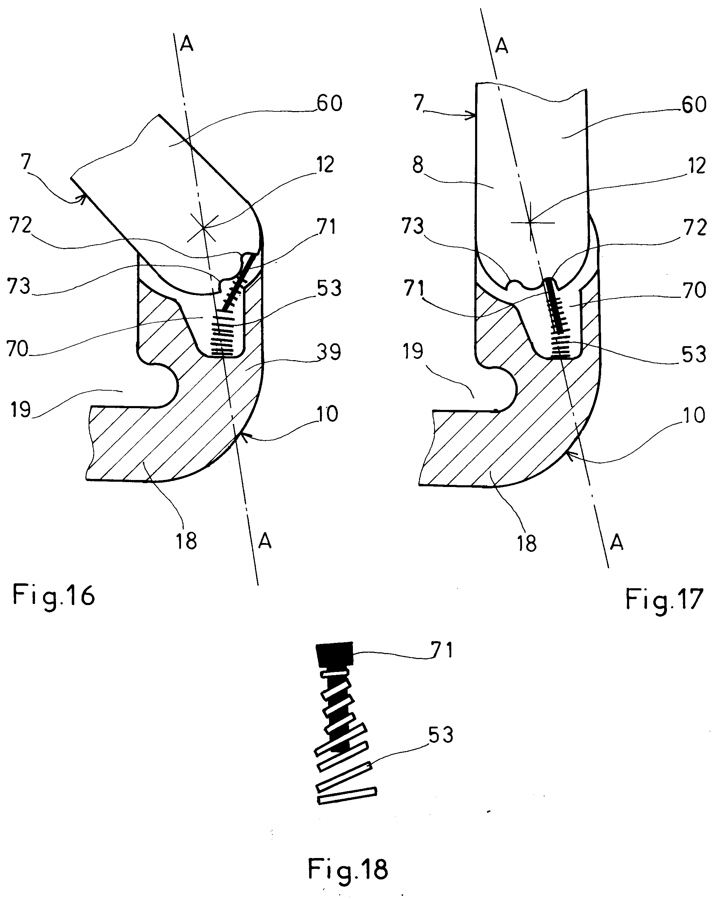

Les figures 16 à 18 représentent un mode de réalisation particulier des moyens de rappel élastique permettant de solliciter le doigt 10 en rotation sur le corps, en particulier vers sa position ouverte.

Dans le mode de réalisation représenté, le doigt 10 comprend, à son extrémité articulée 11, un logement 70 axial ouvert dans la zone d'articulation, et conformé pour contenir le ressort de rappel 53.

Le ressort de rappel 53 est un ressort hélicoidal de compression prolongé par une languette axiale 71.

Le corps 10 comprend, sur son extrémité articulée 8, un premier cran 72 et un second cran 73 décalés l'un par rapport à l'autre.

Le ressort de rappel 53 est appui axial dans le fond du logement 70 axial, tandis que la languette 71 est en appui axial dans l'un des crans 72 ou 73. Sur les figures 16 et 17, la languette est en appui dans le premier cran 72. Ce premier cran 72 est positionné de façon que le ressort de rappel 53 et la languette 71 tendent à rappeler en permanence le doigt 10 vers sa position ouverte. On réalise ainsi un mode de réalisation dans lequel l'ouverture du mousqueton est assistée, et se produit dès l'actionnement des moyens de verrouillage pour leur déverrouillage.

Toutefois, le mode de réalisation représenté permet, en logeant la languette 71 dans le second cran 73, de réaliser un mousqueton dans lequel le ressort 53 a une action légèrement différente : dans ce cas, le second cran 73 est positionné de façon que le ressort de rappel 53 et la languette 71 tendent à rappeler le doigt 10 tantôt vers sa position fermée, tantôt vers sa position ouverte, de part et d'autre d'une position intermédiaire à couple de rappel nul. Pour cela, lors de la rotation du doigt 10, le second cran 73 doit passer alternativement de part et d'autre de la ligne A-A joignant la base du ressort 53 et l'axe de rotation 12. Dans ce cas, le doigt peut rester en position ouverte, position dans laquelle il est maintenu par le ressort ; par un pivotement volontaire du doigt, on dépasse la position intermédiaire à couple de rappel nul, et le doigt est ensuite sollicité par le ressort vers sa position fermée, et inversement.

La présente invention n'est pas limitée aux modes de réalisation qui ont été explicitement décrits, mais elle en inclut les diverses variantes et généralisations contenues dans le domaine des revendications ci-après. On peut par exemple concevoir un mousqueton sans bague de verrouillage mais avec moyens de rappel élastique du doigt en position fermée ; ou un mousqueton avec bague de verrouillage mais sans moyens de rappel élastique du doigt.

## Revendications

**1 -** Mousqueton (1) présentant une forme générale en anneau fermé, destiné à transmettre une charge de traction entre un premier élément de traction (2) et un second élément de traction (3) passant dans l'ouverture de l'anneau, le mousqueton comprenant :

– un corps (7) en forme de tige recourbée entre une première extrémité d'articulation (8) et une seconde extrémité libre d'accrochage (9),

– un doigt de fermeture (10), dont la première extrémité (11) est articulée sur la première extrémité d'articulation (8) du corps selon un axe (12) transversal, et dont la seconde extrémité (13) vient en regard de la seconde extrémité libre d'accrochage (9) du corps,

– le doigt (10) pouvant être pivoté autour de son axe d'articulation (12) entre une position d'ouverture, dans laquelle sa seconde extrémité (13) est écartée de la seconde extrémité libre d'accrochage (9) du corps vers l'intérieur de l'anneau, et une position de fermeture dans laquelle sa seconde extrémité (13) est en contact de la seconde extrémité libre (9) d'accrochage du corps pour former un anneau fermé,

– la seconde extrémité (13) du doigt et la seconde extrémité libre d'accrochage (9) du corps comprenant des formes emboîtantes s'imbriquant l'une dans l'autre telles que, en position de fermeture, les formes emboîtantes interdisent le pivotement du doigt vers l'extérieur de l'anneau et interdisent l'écartement axial relatif des secondes extrémités respectives de doigt et de corps (13, 9),

caractérisé en ce que :

– le mousqueton comprend des moyens de guidage de charge (17, 18) pour que la charge de traction transmise par le premier élément de traction (2) s'applique sur une zone intermédiaire du corps (7) tandis que la charge de traction transmise par le second élément de traction (3) s'applique sur une zone intermédiaire du doigt (10), l'effort de traction entre le premier élément de traction (2) et le second élément de traction (3) s'effectuant ainsi selon une direction privilégiée de traction (I-I) passant dans le plan de l'anneau entre la zone d'articulation (8, 11, 12) et la zone d'accrochage (9, 13) du doigt et du corps,

de sorte que l'application de la charge de traction tend à ramener le corps (7) et le doigt (10) dans leurs positions respectives de fermeture.

**2 -** Mousqueton selon la revendication 1, caractérisé en ce que les moyens de guidage de charge comprennent :

– le fait que le mousqueton (1) présente une forme générale en anneau allongé selon une direction privilégiée de traction (I-I) passant par deux extrémités (17, 18) opposées, lesdites extrémités (17, 18) opposées constituant des extrémités d'application d'effort de traction,

– le fait que le corps de mousqueton (7) comprend la première extrémité d'application d'effort de traction (17),

– le fait que le doigt de mousqueton (10) comprend la seconde extrémité d'application d'effort de traction (18),

de sorte que, lors de l'application d'un effort de traction entre un premier élément de traction (2) et un second élément de traction (3), le mousqueton (1) tend naturellement à s'orienter de façon que sa plus grande dimension soit sensiblement parallèle à la direction de l'effort de traction (I-I), le premier élément de traction (2) s'accrochant au corps (7), le second élément de traction (3) s'accrochant au doigt (10).

**3 -** Mousqueton selon l'une des revendications 1 ou 2, caractérisé en ce que les moyens de guidage de charge comprennent une lumière ou encoche (19) ménagée dans le doigt (10) selon une position intermédiaire et conformée pour être traversée par le second élément de traction (3), fixant ainsi le point d'application de l'effort de traction du second élément de traction (3) sur le mousqueton (1).

**4 -** Mousqueton selon la revendication 3, caractérisé en ce que:

– le doigt (10) présente une forme recourbée, avec une partie intermédiaire (18) en arc de faible diamètre comprenant ladite encoche ou lumière de passage (19) du second élément de traction (3), avec une première branche latérale (22, 39) de plus faible longueur comprenant la première extrémité (11) articulée, et avec une seconde branche latérale (23, 40, 45) de plus grande longueur comprenant la seconde extrémité (13) d'accrochage,

– le corps (7) présente également une forme recourbée avec une partie intermédiaire (17) en arc de faible diamètre formant extrémité d'application de l'effort de traction, avec une première branche latérale longitudinale (20, 42, 44, 60) de plus grande longueur comprenant la première extrémité d'articulation (8), et avec une seconde branche latérale (21, 43, 61) de corps de plus faible longueur comprenant la seconde extrémité libre d'accrochage (9).

5 - Mousqueton selon la revendication 4, caractérisé en ce que:

– la première branche latérale longitudinale (44) du corps (7) est légèrement incurvée, à concavité tournée vers l'intérieur,

– la seconde branche latérale (23, 45) du doigt (10) est légèrement incurvée vers l'extérieur, de façon à suivre sensiblement l'incurvation de la première branche latérale (44) du corps lorsque le mousqueton est en position ouverte.

6 - Mousqueton selon l'une quelconque des revendications 1 à 5, caractérisé en ce qu'il comprend en outre des moyens de verrouillage déverrouillables pour immobiliser sélectivement le doigt (10) sur le corps (7) en position fermée du mousqueton, et interdire alors le pivotement du doigt (10) vers sa position d'ouverture.

7 - Mousqueton selon la revendication 6, caractérisé en ce que les moyens de verrouillage déverrouillables comprennent une bague de verrouillage (24, 33), montée sur une portion rectiligne (20) du mousqueton, et rappelée par un ressort vers une position de verrouillage dans laquelle elle immobilise l'une par rapport à l'autre, en position fermée, deux extrémités respectives (9, 13) de corps (7) et de doigt (10) pour interdire le pivotement du doigt (10) vers sa position d'ouverture.

8 - Mousqueton selon la revendication 7, caractérisé en ce que la bague (24, 33) de verrouillage est montée sur la partie de corps (20) adjacente à son extrémité d'articulation (8).

9 - Mousqueton selon la revendication 8, caractérisé en ce que le doigt comprend, au voisinage de son extrémité d'articulation (11), un premier ergot (25) venant en appui sur la surface latérale extérieure (26) de la bague de verrouillage (24) lorsque celle-ci est en position de verrouillage doigt fermé, interdisant l'ouverture du doigt (10).

10 - Mousqueton selon la revendication 9, caractérisé en ce que le premier ergot (25) vient en appui sur la surface latérale intérieure de la bague de verrouillage (24) lorsque celle-ci est en position de verrouillage doigt ouvert, s'opposant ainsi à la fermeture du doigt (10).

11 - Mousqueton selon la revendication 10, caractérisé en ce que le premier ergot (25) comporte une face d'appui oblique (28), de sorte que, sous l'application d'un effort de traction entre le premier élément de traction (2) et le second élément de traction (3), l'effort de traction tend à faire pivoter le doigt vers sa position de fermeture, ce qui provoque le déplacement axial de la bague de verrouillage (24) en appui contre la face d'appui oblique (28), à l'encontre du ressort de rappel de bague, et la bague (24) de verrouillage libère le doigt qui pivote jusqu'à sa position de fermeture, la bague de verrouillage (24) étant alors rappelée en position de verrouillage par son ressort pour interdire l'ouverture du doigt (10).

12 - Mousqueton selon la revendication 8, caractérisé en ce que:

– l'extrémité articulée (11) du doigt (10) comprend au moins une facette (30) de maintien en position fermée et une facette (31) de maintien en position ouverte, la facette (30) de maintien en position fermée étant bordée par une facette de verrouillage (32) la reliant à la facette (31) de maintien en position ouverte,

– la bague de verrouillage (33) entraîne en translation axiale un axe de verrouillage (35) dont une extrémité vient porter contre l'extrémité articulée (11) du doigt (10) de mousqueton, de sorte que, en position fermée, l'axe de verrouillage (35) porte axialement contre la facette (30) de maintien en position fermée et porte latéralement contre la facette de verrouillage (32) qui interdit le pivotement du doigt (10) vers sa position ouverte, et de sorte que, en position ouverte, l'axe de verrouillage (35) porte axialement contre la facette (31) de maintien en position ouverte et n'oppose pas une résistance importante au retour du doigt (10) en position fermée.

13 - Mousqueton selon la revendication 6, caractérisé en ce que les moyens de verrouillage comprennent :

– au moins un levier de verrouillage (46) monté pivotant sur le corps (7) de mousqueton selon un axe transversal intermédiaire sensiblement parallèle au plan de mousqueton, le levier de verrouillage (46) comportant une branche d'actionnement (49) accessible par l'utilisateur par pression radiale sur le corps de mousqueton, et une branche de verrouillage (50) destinée à s'engager sur des parties correspondantes (51) du doigt,

– au moins une encoche latérale (51) ménagée sur l'extrémité articulée (11) du doigt, dans laquelle peut s'engager la branche de verrouillage (50) du levier de verrouillage lorsque le doigt est fermé,

– le levier de verrouillage (46) pouvant pivoter entre une position verrouillée, dans laquelle l'extrémité de branche de verrouillage (50) porte contre l'extrémité articulée (11) du doigt et s'engage dans son encoche latérale (51) pour interdire son pivotement, et une position déverrouillée dans laquelle la branche de verrouillage (50) est à l'écart du doigt (10) pour autoriser son pivotement,

– des moyens élastiques (52) pour rappeler le levier de verrouillage (46) vers sa position verrouillée.

14 - Mousqueton selon la revendication 13, caractérisé en ce qu'il comprend deux leviers de verrouillage (46, 146) diamétralement opposés et coopérant avec deux encoches opposées (51, 151) de l'extrémité articulée du doigt, un anneau élastique (52) entourant le corps de mousqueton et les branches de verrouillage des leviers de verrouillage (46, 146) pour rappeler les leviers de verrouillage dans leur position verrouillée.

15 - Mousqueton selon l'une quelconque des revendications 6 à 14, caractérisé en ce qu'il comprend en outre un ressort de rappel (53) sollicitant le doigt (10) en rotation sur le corps (7) vers sa position ouverte, de sorte que, en l'absence de charge, le déverrouillage des moyens de verrouillage (46, 146) produit l'ouverture automatique du mousqueton.

16 - Mousqueton selon la revendication 15, caractérisé en ce que :

– le doigt (10) comprend, à son extrémité articulée (11), un logement (70) axial ouvert dans la zone d'articulation, et conformé pour contenir le ressort de rappel (53),

– le ressort de rappel (53) est un ressort hélicoïdal de compression prolongé par une languette axiale (71),

– le corps (10) comprend, sur son extrémité articulée (8), un premier cran (72) et un second cran (73) décalés l'un par rapport à l'autre,

– le ressort de rappel (53) est en appui axial dans le fond du logement (70) axial, tandis que la languette (71) est en appui axial dans l'un des crans (72, 73),

– le premier cran (72) est positionné de façon que le ressort de rappel (53) et la languette (71) tendent à rappeler en permanence le doigt (10) vers sa position ouverte,

– le second cran (73) est positionné de façon que le ressort de rappel (53) et la languette (71) tendent à rappeler le doigt (10) tantôt vers sa position fermée, tantôt vers sa position ouverte, de part et d'autre d'une position intermédiaire à couple de rappel nul.

17 - Mousqueton selon l'une quelconque des revendications 2 à 16, caractérisé en ce que:

– les extrémités d'application d'effort de traction sont positionnées sur le mousqueton de telle façon que la direction privilégiée de traction (I-I) est plus proche de l'extrémité d'articulation (11) du doigt (10) que de son extrémité libre d'accrochage (13),

– le corps (7) comprend, à partir de sa première extrémité d'articulation (8), une portion longitudinale (20) généralement peu incurvée et parallèle à la direction privilégiée de traction I-I, une extrémité d'application d'effort de traction (17) fortement incurvée selon un angle supérieur à 90 degrés, une portion transversale (21) généralement oblique elle-même incurvée jusqu'à la seconde extrémité d'accrochage (9).

18 - Mousqueton selon l'une quelconque des revendications 2 à 16, caractérisé en ce que :

– le corps (7) comprend, à partir de sa première extrémité d'articulation (8), une partie longitudinale rectiligne (62) sensiblement parallèle à la direction privilégiée de traction I-I, suivie d'une partie arrondie (63) déportée vers l'extérieur, se raccordant à l'extrémité d'application d'effort de traction (17) fortement incurvée selon un angle supérieur à 90 degrés, elle-même suivie d'une portion oblique (64) sensiblement rectiligne et généralement parallèle au déplacement de l'extrémité libre d'accrochage (13) du doigt (10), se raccordant par un coude (65) à un segment d'extrémité (66) légèrement incurvé à concavité tournée vers l'extérieur,

– le doigt (10) comprend, à partir de sa première extrémité d'articulation (11), une première branche latérale (39) de plus faible longueur et sensiblement parallèle à la direction privilégiée de traction I-I lorsque le doigt est en position fermée, la partie intermédiaire (18) en arc de faible diamètre, et une seconde branche latérale (45) de plus grande longueur à concavité légère tournée vers l'extérieur et comportant la seconde extrémité (13) d'accrochage.

19 - Ensemble d'accrochage, caractérisé en ce qu'il comprend:

– un mousqueton autoverrouillant selon l'une quelconque des revendications 1 à 18,

– un second élément de traction (3) en forme de sangle, de corde, de câble ou de mousqueton, passé dans le mousqueton (1),

– un mousqueton auxiliaire (5) solidaire dudit second élément de traction (3).

Fig_1          Fig_2

Fig.3

Fig.4

Fig.5

Fig.6

Fig.7

Fig.8

35

34

Fig.9

35

137

33

Fig.10

34

Fig.11

Fig.12 Fig.13

Fig.14

EP 0 466 613 A2

Fig.15

Fig.16

Fig.17

Fig.18